(19) Europäisches Patentamt

European Patent Office

Office européen des brevets

(11) **EP 2 868 671 A1**

(12) # EUROPEAN PATENT APPLICATION
published in accordance with Art. 153(4) EPC

(43) Date of publication:
**06.05.2015 Bulletin 2015/19**

(21) Application number: **13809577.3**

(22) Date of filing: **28.06.2013**

(51) Int Cl.:
**C08F 2/01** (2006.01)   **C08F 2/02** (2006.01)
**C08F 6/28** (2006.01)

(86) International application number:
**PCT/JP2013/004036**

(87) International publication number:
**WO 2014/002503 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012   JP 2012147996**

(71) Applicant: **Kuraray Co., Ltd.**
**Okayama 710-0801 (JP)**

(72) Inventors:
• OZAWA, Hiroshi
**Tainai-shi**
**Niigata 959-2691 (JP)**
• TANAKA, Shouji
**Tainai-shi**
**Niigata 959-2691 (JP)**
• KITADE, Yasuhito
**Tainai-shi**
**Niigata 959-2691 (JP)**

(74) Representative: **Müller-Boré & Partner**
**Patentanwälte PartG mbB**
**Friedenheimer Brücke 21**
**80639 München (DE)**

(54) **MANUFACTURING METHOD FOR (METH)ACRYLIC RESIN COMPOSITION**

(57)     A method of producing a (meth)acrylic resin composition. The method comprises a step of continuously feeding a reaction raw material including a chain transfer agent, a radical polymerization initiator and a monomer mixture comprising 80 to 100 % by mass of methyl methacrylate and 20 to 0 % by mass of an alkyl acrylate to a tank reactor through two or more feeding ports; a step of bulk polymerizing the monomer mixture in the tank reactor until a polymerization conversion of 40 to 70 % by mass to prepare a reaction product; and a step of removing the monomer mixture from the reaction product. The perfect mixing time ($\theta_M$ [hr]) of the tank reactor, the half-life ($\tau_{1/2}$ [hr]) of the radical polymerization initiator at the temperature in the tank reactor, the stirring power (Pv [kW/m$^3$]) of the tank reactor, the mean residence time ($\theta$ [hr]) of the reaction raw material in the tank reactor, and the concentration (I [ppm]) of the radical polymerization initiator in the reaction raw material satisfy the following relationships: $\theta_M > \tau_{1/2}$, and $P_v \times \theta \times I \times \tau_{1/2} < 4$.

EP 2 868 671 A1

**Description**

TECHNICAL FIELD

The present invention relates to a method of producing a (meth)acrylic resin composition. More specifically, the present invention relates to a method of producing a (meth)acrylic resin composition that has an excellent thermal stability and can provide a substantially colorless molded product with high production efficiency.

BACKGROUND ART

Molded products made from (meth)acrylic resin compositions have excellent transparency and less optical strain and are therefore widely used as optical members such as lenses, prisms, phase difference films, light guide plates, light diffusion films, and polarizing plate protective films.

As a method of producing a (meth)acrylic resin composition, for example, Patent Document 1 discloses a method comprising continuous bulk polymerization of a monomer mixture mainly comprising methyl methacrylate with a single complete mixing-type reactor without using any solvent, wherein the dissolved oxygen in the monomer mixture is reduced to 1 ppm or less by introduction of an inert gas; and the polymerization is then performed so as to be 45% to 70% in a conversion from monomer at 130°C to 160°C using a radical initiator having a half-life of 0.5 to 120 seconds at the polymerization temperature; stirring with a stirrer having a power consumption of 0.5 to 20 kW for stirring 1 $m^3$ of a reaction solution; and setting the mean residence time such that the ratio of the half-life of the radical initiator at the polymerization temperature to the mean residence time is from 1/200 to 1/10000.

Patent Document 2 discloses a method of producing a methacrylic polymer having a polymer content of 40 to 70 % by weight by bulk polymerizing a monomer mainly comprising methyl methacrylate using a complete mixing-type reaction tank, wherein the reaction tank is fully filled with a solution such that a gas phase is substantially not present; and the polymerization is performed in an adiabatic state such that transfer of heat from the outside of the reaction tank is substantially shut at a polymerization temperature (T [°C]) of 120°C to 180°C and a mean residence time ($\theta$ [min]) of 15 minutes to 2 hours using a radical initiator having a half-life of 1 minute or less at the polymerization temperature at a concentration (C [mol/100 g of monomer]) within a range of $4 \times 10^{-5} \cdot e^{0.019T} < C \cdot \theta < 3 \times 10^{-8} \cdot e^{0.079T}$.

Patent Document 3 discloses a method of producing a methacrylic polymer comprising 80 % by weight or more of a methyl methacrylate unit and 20 % by weight or less of an alkyl acrylate or alkyl methacrylate unit (except for methyl methacrylate unit) through a process comprising continuous bulk polymerization by continuously feeding to a reaction zone (a) 0.01 to 1.0 mol% of mercaptan and (b) a monomer material containing a radical polymerization initiator such that the number of moles (A) of the radical polymerization initiator in one mole of the monomer fed and the half-life (B [hr]) of the radical polymerization initiator at the polymerization temperature satisfy the relationships: $1.3 \le A \cdot (B^{-2/5}) \times 10^5$, $A \le 0.5 \times 10^{-4}$, and $0.01 \le B \le 0.3$; substantially uniformly mixing the reaction mixture in the reaction zone by stirring in a temperature range of not less than 110°C and less than 150°C to perform polymerization such that the polymer content ($\varphi$ [% by weight]) in the reaction mixture in the reaction zone satisfies a relationship: $40 \le \varphi \le 65$; and continuously discharging the reaction mixture from the reaction zone.

CITATION LIST

PATENT DOCUMENT

Patent Document 1: JP 2752458 B
Patent Document 2: JP H07-126308 A
Patent Document 3: JP H11-255828 A
Patent Document 4: JP S61-200842 A
Patent Document 5: JP H06-312122 A

NON-PATENT DOCUMENT

Non-Patent Document 1: NOF Corporation technical data "Hydrogen Abstraction Ability and Initiation Efficiency of Organic Peroxide" (written in April, 2003)
Non-Patent Document 2: Chemical Engineering References, Edited by Society of Chemical Engineering of Japan, 3rd revision, p. 1068 (1968)

SUMMARY OF THE INVENTION

PROBLEMS TO BE RESOLVED BY THE INVENTION

The production methods of Patent Documents 1 and 2 use radical polymerization initiators having short lifetimes and can therefore easily control the polymerization reaction. However, the production method of Patent Document 1 uses a relatively large amount of a radical polymerization initiator, which may increase the content of a (meth)acrylic resin having a terminal double bond and provide insufficient thermal stability. The production method of Patent Document 2 performs the polymerization at a relatively high polymerization temperature for a short residence time, which tends to increase the content of a dimer or a trimer, resulting in a tendency of causing silver in the molded product. In the production method of Patent Document 3, the use of a peroxide polymerization initiator may easily cause coloring in the molded product, and the use of an azo polymerization initiator needs a long residence time to increase the content of a dimer or a trimer, resulting in a tendency of causing silver in the molded product.

An object of the present invention is to provide a method of producing a (meth)acrylic resin composition that has an excellent thermal stability and can provide a substantially colorless molded product with high production efficiency.

MEANS FOR SOLVING THE PROBLEMS

In order to achieve the above-mentioned object, the present invention includes the following aspects:

(1) A method of producing a (meth)acrylic resin composition, wherein the method comprises the steps of:

continuously feeding a reaction raw material comprising a chain transfer agent, a radical polymerization initiator and a monomer mixture comprising 80 to 100 % by mass of methyl methacrylate and 20 to 0 % by mass of an alkyl acrylate to a tank reactor through two or more feeding ports;
bulk polymerizing the monomer mixture in the tank reactor until a polymerization conversion of 40 to 70 % by mass to obtain a reaction product; and
removing the monomer mixture from the reaction product,
wherein the perfect mixing time ($\theta_M$ [hr]) of the tank reactor, the half-life ($\tau_{1/2}$ [hr]) of the radical polymerization initiator at the temperature in the tank reactor, the stirring power ($P_v$ [kW/m$^3$]) of the tank reactor, the mean residence time ($\theta$ [hr]) of the reaction raw material in the tank reactor, and the concentration (I [ppm]) of the radical polymerization initiator in the reaction raw material satisfy the following relationships:

$$\theta_M > \tau_{1/2},$$

and

$$P_v \times \theta \times I \times \tau_{1/2} < 4.$$

(2) The method according to Aspect (1), wherein the temperature in the tank reactor is 110°C to 160°C; and the half-life of the radical polymerization initiator at the temperature in the tank reactor is 0.5 to 120 seconds.
(3) The method according to Aspect (1) or (2), wherein the step of removing the monomer mixture is performed by adiabatic flash evaporation.
(4) The method according to any one of Aspects (1) to (3), wherein the reaction solution in the tank reactor has a water content of 1000 ppm or less.

ADVANTAGEOUS EFFECTS OF THE INVENTION

The method of producing a (meth)acrylic resin composition of the present invention can produce a (meth)acrylic resin composition that has an excellent thermal stability and can provide a substantially colorless molded product with high production efficiency. In the bulk polymerization of a monomer mixture in accordance with the method of producing a (meth)acrylic resin composition of the present invention, the efficiency of the radical polymerization initiator is enhanced, and the necessary amount of the radical polymerization initiator can be reduced.

EMBODIMENTS FOR CARRYING OUT THE INVENTION

The method of producing a (meth)acrylic resin composition according to an embodiment of the present invention comprises a step of continuously feeding a reaction raw material comprising a monomer mixture, a chain transfer agent, and a radical polymerization initiator to a tank reactor; a step of bulk polymerizing the monomer mixture in the tank reactor to prepare a reaction product, and a step of removing the monomer mixture from the reaction product.

The reaction raw material used in the present invention comprises a monomer mixture, a chain transfer agent, and a radical polymerization initiator.

The monomer mixture comprises 80 to 100 % by mass, preferably 80 to 96 % by mass, of methyl methacrylate. The monomer mixture also comprises 0 to 20 % by mass, preferably 4 to 20 % by mass, of an alkyl acrylate. Examples of the alkyl acrylate include methyl acrylate, ethyl acrylate, propyl acrylate, butyl acrylate, and 2-ethylhexyl acrylate.

The monomer mixture may comprise another monomer, in addition to the methyl methacrylate and alkyl acrylate. Examples of such a monomer include alkyl methacrylates other than methyl methacrylate, such as ethyl methacrylate, butyl methacrylate and the like; aryl methacrylates such as phenyl methacrylate and the like; cycloalkyl methacrylates such as cyclohexyl methacrylate, norbornenyl methacrylate and the like; aryl acrylates such as phenyl acrylate and the like; cycloalkyl acrylates such as cyclohexyl acrylate, norbornenyl acrylate and the like; aromatic vinyl monomers such as styrene, $\alpha$-methylstyrene and the like; and vinyl monomers having a single polymerizable alkenyl group in a molecule, such as acrylamide, methacrylamide, acrylonitrile, methacrylonitrile and the like. The content of these monomers other than the methyl methacrylate and alkyl acrylate in the monomer mixture is preferably 10 % by mass or less and more preferably 5 % by mass or less.

The monomer mixture has a b* value of preferably -1 to 2, more preferably -0.5 to 1.5. The b* value within this range is advantageous for forming substantially colorless molded products from the (meth)acrylic resin composition with a high production efficiency. The b* value is measured in accordance with Commission Internationale de l'Eclairage (CIE) standard (1976) or JIS Z-8722.

The monomer mixture removed from the reaction product in the step of removing the monomer mixture from the reaction product is collected and can be used again in the present invention. When the b* value of the collected monomer mixture is increased by the heat applied, for example, in the collection process, the b* value is preferably adjusted to the above-mentioned range by purification by an appropriate method.

The polymerization initiator used in the present invention may be any initiator that generates reactive radicals, and examples thereof include t-hexyl peroxyisopropylmonocarbonate, t-hexyl peroxy-2-ethylhexanoate, 1,1,3,3-tetramethylbutylperoxy-2-ethyl hexanoate, t-butylperoxy pivalate, t-hexylperoxy pivalate, t-butyl peroxyneodecanoate, t-hexyl peroxyneodecanoate, 1,1,3,3-tetramethylbutyl peroxyneodecanoate, 1,1-bis(t-hexylperoxy)cyclohexane, benzoyl peroxide, 3,5,5-trimethylhexanoyl peroxide, lauroyl peroxide, 2,2'-azobis(2-methylpropionitrile), 2,2'-azobis(2-methylbutyronitrile), and dimethyl 2,2'-azobis(2-methylpropionate). Preferred examples are t-hexyl peroxy-2-ethylhexanoate, 1,1-bis(t-hexylperoxy)cyclohexane, and dimethyl 2,2'-azobis(2-methylpropionate).

The polymerization initiator used in the present invention preferably has a half-life of 0.5 to 120 seconds, more preferably 2 to 60 seconds, at the temperature in the tank reactor described below. The polymerization initiator preferably has a hydrogen abstraction ability of 40% or less and more preferably 30% or less. These polymerization initiators may be used alone or in combination of two or more thereof.

The hydrogen abstraction ability can be known from, for example, technical data of a polymerization initiator manufacturer (for example, Non-Patent Document 1). Alternatively, the hydrogen abstraction ability can be measured by a radical trapping method using $\alpha$-methylstyrene dimer, i.e., an $\alpha$-methylstyrene dimer trapping method. This measurement is usually performed as follows. First, a polymerization initiator is cleaved into radical moieties in the presence of $\alpha$-methylstyrene dimer serving as a radical trapping agent. Among the generated radical moieties, a radical moiety having low hydrogen abstraction ability is bound to and captured by the double bond of the $\alpha$-methylstyrene dimer. On the other hand, a radical moiety having high hydrogen abstraction ability abstracts hydrogen from the cyclohexane to generate a cyclohexyl radical, and the cyclohexyl radical is bound to and captured by the double bond of the $\alpha$-methylstyrene dimer to generate cyclohexane-captured product. Accordingly, the ratio (mole fraction) of the radical moieties having high hydrogen abstraction ability to the theoretical radical moiety yield determined by quantitatively measuring the cyclohexane or cyclohexane-captured product is defined as the hydrogen abstraction ability.

The amount of the polymerization initiator used is preferably within a range of 0.0001 to 0.02 part by mass, more preferably 0.001 to 0.01 part by mass, based on 100 parts by mass of the monomer mixture.

Examples of the chain transfer agent used in the present invention include alkyl mercaptans such as n-octylmercaptan, n-dodecylmercaptan, t-dodecylmercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-($\beta$-thiopropionate), pentaerythritol tetrakisthiopropionate and the like; $\alpha$-methylstyrene dimer; terpinolene and the like.

Among these chain transfer agents, preferred are monofunctional alkyl mercaptans such as n-octylmercaptan and n-dodecylmercaptan. These chain transfer agents may be used alone or in combination of two or more thereof. The amount of the chain transfer agent used is preferably 0.1 to 1 part by mass, more preferably 0.2 to 0.8 part by mass, and most preferably 0.3 to 0.6 part by mass, based on 100 parts by mass of the monomer mixture.

Although in principle no solvent is used in bulk polymerization, the monomer mixture can contain a solvent for, for example, adjusting the viscosity of the reaction solution, if necessary. Preferred examples of the solvent include aromatic hydrocarbons such as benzene, toluene, and ethylbenzene. These solvents may be used alone or in combination of two or more thereof. The amount of the solvent used is preferably 30 parts by mass or less, more preferably 10 parts by mass or less, based on 100 parts by mass of the monomer mixture.

The reaction raw material used in the present invention preferably has a dissolved oxygen content of 10 ppm or less, more preferably 5 ppm or less, more preferably 4 ppm or less, and most preferably 3 ppm or less. By controlling the content of dissolved oxygen within such a range, the polymerization reaction smoothly progresses, and a molded product not having silver or coloring can be readily prepared.

There is especially no limitation by the method of preparing the reaction raw material. The reaction raw material is preferably prepared immediately before being fed to the tank reactor. The reaction raw material is preferably prepared in an inert atmosphere, such as nitrogen gas. In order to smoothly perform continuous flow operation, it is preferable to continuously feed each constituent component of the reaction raw material to a mixer placed in the previous stage to the reaction tank from the storage tanks through the respective tubes, mix them in the mixer, and continuously feed the resulting mixture to the reaction tank. The mixer can have a dynamic stirrer or a static stirrer.

The tank reactor usually comprises a reaction tank, a stirring means for stirring the solution in the reaction tank, feeding ports for feeding a reaction raw material to the reaction tank, and an discharging port for discharging the reaction product from the reaction tank. The solution amount in the reaction tank is maintained substantially constant by balancing between the amount of the reaction raw material fed to the reaction tank and the amount of the reaction product discharged from the reaction tank. The solution amount in the reaction tank is preferably 1/4 or more, more preferably 1/4 to 3/4, and most preferably 1/3 to 2/3 based on the capacity of the reaction tank.

The tank reactor used in the present invention comprises the feeding ports for feeding the reaction raw material at a plurality of positions. The reaction raw material is continuously fed from at least two feeding ports simultaneously or alternately, preferably simultaneously. The feeding ports may be placed on the top of the reaction tank, may be placed on the side of the reaction tank, may be placed on the bottom of the reaction tank, or may be placed on at least two of the top, the side, and the bottom of the reaction tank. The feeding ports are preferably placed at positions symmetric to each other. The position of each feeding port may be higher than the height of the surface of the solution in the reaction tank or may be lower than the height of the surface of the solution in the reaction tank. The shape of each feeding port may be the same as the section of a circular tube or may be one that allows the reaction raw material to be widely dispersed onto the surface of the solution in the reaction tank. By providing at least two feeding ports, the initiation efficiency of the polymerization initiator is increased, and the amount of the polymerization initiator necessary for achieving desired polymerization conversion can be reduced.

Examples of the stirring means include a max blend stirrer, a lattice blade stirrer, a propeller stirrer, a screw stirrer, a helical ribbon stirrer, and a paddle stirrer. Among these stirrers, a max blend stirrer is preferred from the viewpoint of homogenous mixing.

The temperature in the tank reactor, i.e., the temperature of the solution in the reaction tank, is preferably 100°C to 170°C, more preferably 110°C to 160°C, and most preferably 115°C to 150°C. The solution temperature can be controlled by an external heat exchange type conditioning method with, for example, a jacket or heat transfer tube or by a self-heat exchange type conditioning method by disposing, in the reaction tank, a tube in which the reaction raw material or reaction product flows.

In the method of producing a (meth)acrylic resin composition of the present invention, the water content of the reaction solution in the tank reactor is preferably 1000 ppm or less, more preferably 700 ppm or less, and most preferably 280 ppm or less. By controlling the water content to 1000 ppm or less, a resin foreign material of several to several tens micrometers can be prevented from being generated during the polymerization reaction, and when the resulting (meth)acrylic resin composition is formed into a film or a sheet by melt-molding, occurrence of defects having external diameter of several tens micrometers caused by the resin foreign material as nuclei can be considerably reduced.

Although the mechanism of suppressing the generation of the resin foreign material is not clear, it is conceived that a high molecular weight (meth)acrylic resin unintentionally generated in the gas phase of the reaction tank is mixed as the resin foreign material with the monomer mixture during the polymerization and becomes the nucleus of a defect as a unmelted material in the melt-molding.

The amount of water in the reaction solution can be reduced by, for example, a method comprising treating the raw material solution in advance with an absorption and dehydration column or a method comprising introducing an inert gas into the gas phase of the tank reactor and condensing a part of the vapor together with the inert gas with a brine-cooled condenser to discharge the water to the outside of the system.

In the production method of the present invention, the perfect mixing time ($\theta_M$ [hr]) of the tank reactor is longer than the length of the half-life ($\tau_{1/2}$ [hr] of the radical polymerization initiator at the temperature in the tank reactor, preferably 1.2 times or more the length of the half-life. That is, a relationship of $\theta_M > \tau_{1/2}$, preferably a relationship of $\theta_M > 1.2 \times \tau_{1/2}$ is satisfied. The perfect mixing time is one indicator representing the mixing characteristics of a reaction tank and can be determined from an "$n \cdot \theta_M$ - Re curve" showing the relationship between $n \cdot \theta_M$ (dimensionless mixed number (n represents the rotation speed [1/sec]) of the stirrer blade) and Re (Reynolds' number: an indicator representing the disorder state of a solution). The perfect mixing time and the $n \cdot \theta_M$-Re curve are described in, for example, Non-Patent Document 2, Patent Document 4, and Patent Document 5.

In the tank reactor, bulk polymerization is performed until obtaining a polymerization conversion of 40 to 70 % by mass and preferably 35 to 65% by mass.

The stirring power (Pv) of the tank reactor is preferably 0.2 to 7 kW/m$^3$, more preferably 0.3 to 6 kW/m$^3$, and most preferably 0.4 to 5 kW/m$^3$. The stirring power can be adjusted by the shape and the rotation speed of the stirrer blade and the viscosity and the density of the solution in the reaction tank.

The mean residence time ($\theta$) of the reaction raw material in the tank reactor is preferably 0.5 to 6 hours, more preferably 1 to 5 hours, and most preferably 2 to 4 hours. A too short mean residence time increases the necessary amount of the polymerization initiator. The increase in the amount of the polymerization initiator tends to make it difficult to control the polymerization reaction and also difficult to control the molecular weight. On the other hand, a too long mean residence time tends to elongate the time until the reaction becomes a steady state and to decrease the productivity. The mean residence time can be adjusted by the capacity of the tank reactor and the feeding amount of the reaction raw material.

The stirring power (Pv [kW/m$^3$]) of the tank reactor and the mean residence time ($\theta$ [hr]) in the tank reactor are adjusted such that the concentration (I [ppm]) of the radical polymerization initiator in the reaction raw material and the half-life ($\tau_{1/2}$ [hr]) of the radical polymerization initiator at the temperature in the tank reactor satisfy the relationship: $P_v \times \theta \times I \times \tau_{1/2} < 4$, preferably $P_v \times \theta \times I \times \tau_{1/2} < 3$. The bulk polymerization is preferably performed in an inert gas atmosphere, such as nitrogen gas.

Another reactor may be connected to the post stage of the tank reactor. The reactor that is connected to the post stage may be a tank reactor or a tube reactor.

When the reaction product obtained by the bulk polymerization under the above-described conditions is discharged from the tank reactor, the discharge amount of the reaction product is preferably balanced with the feeding amount of the reaction raw material such that the reaction solution amount in the reaction tank is constant.

The reaction product to be discharged preferably has a (meth)acrylic resin content of 40 to 70 % by mass and more preferably 35 to 65 % by mass. A too high content of the (meth)acrylic resin increases the viscosity, resulting in a tendency of requiring a higher stirring power. A too low content of the (meth)acrylic resin causes insufficient removal of the monomer mixture and other components in the step of removing the monomer mixture from the reaction product, and a molded product formed from the resulting (meth)acrylic resin composition tends to have poor appearance such as silver.

The (meth)acrylic resin preferably has a weight-average molecular weight (hereinafter, may referred to as Mw) of 35 thousand to 200 thousand, more preferably 40 thousand to 150 thousand, and most preferably 45 thousand to 130 thousand. A too small Mw tends to decrease the impact resistance and the toughness of a molded product produced from the (meth)acrylic resin composition. A too large Mw decreases the fluidity of the (meth)acrylic resin composition, resulting in a tendency of reducing the molding processability.

In the (meth)acrylic resin, the ratio of the weight-average molecular weight to the number-average molecular weight (hereinafter, this ratio may be noted as molecular weight distribution) is preferably 1.5 to 2.6, more preferably 1.6 to 2.3, and most preferably 1.7 to 2.0. When the molecular weight distribution is low, the molding processability of the (meth)acrylic resin composition tends to decrease, whereas when the molecular weight distribution is high, the molded product produced from the (meth)acrylic resin composition tends to have low impact resistance and to be brittle.

The weight-average molecular weight and the number-average molecular weight are molecular weights in terms of standard polystyrene measured by gel permeation chromatography (GPC). The weight-average molecular weight and the molecular weight distribution of a (meth)acrylic resin can be controlled by fixing the types and the amounts of the polymerization initiator and the chain transfer agent.

The production method of the present invention comprises a step of removing the monomer mixture from the reaction product. Herein, the reaction product is not limited to the reaction product obtained by bulk polymerization in the tank reactor and may be a reaction product obtained in another reactor optionally connected to the post stage of the tank reactor, i.e., a reaction product obtained by further polymerizing in another reactor the unreacted monomer mixture in the reaction product obtained by bulk polymerization in the tank reactor to increase the polymerization conversion. In this step, the solvent is simultaneously removed as necessary. The removal process is not particularly limited and is preferably a heat-devolatilizing process. Examples of the heat-devolatilizing process include equilibrium flash evaporation and adiabatic flash evaporation, and preferred is the adiabatic flash evaporation. The temperature for the adiabatic flash evaporation is preferably 200°C to 300°C and more preferably 220°C to 270°C. When the adiabatic flash evaporation is performed at a temperature lower than 200°C, the devolatilization takes a long time to cause insufficient devolatilization, which may cause poor appearance of the molded product, such as silver. On the other hand, when the adiabatic flash evaporation is performed at a temperature higher than 300°C, the (meth)acrylic resin composition tends to be stained by oxidation or burning. The adiabatic flash evaporation may be performed by multiple stages. In such a case, the reaction product flowing in a heat transfer tube is heated by the steam of the flash-evaporated monomer mixture, and the heated reaction product is fed to a low-pressure flash tank and can be flash-evaporated therein. The reaction product can be pressurized with, for example, a pump. After the removal of the monomer mixture, the (meth)acrylic resin composition can be formed into a pellet or a powder and granule in accordance with a known method, in order to enhance the workability as a molding material. The content of the monomer mixture in the (meth)acrylic resin composition obtained in the present invention is preferably 1 % by mass or less and more preferably 0.5 % by mass or less.

The (meth)acrylic resin composition obtained by the production method of the present invention may optionally comprise various additives. The amount of the additives is preferably 0.5 % by mass or less, more preferably 0.2 % by mass or less, based on the amount of the (meth)acrylic resin composition. A too large amount of additives may cause poor appearance of the molded product, such as silver.

Examples of the additives include antioxidants, thermal degradation inhibitors, ultraviolet absorbers, light stabilizers, lubricants, mold-releasing agents, polymer processing aids, antistatic agents, flame retardants, dyes and pigments, light diffusion agents, organic coloring agents, delustering agents, impact resistance modifiers, and fluorescent materials.

The antioxidant has by alone an effect of preventing oxidative degradation of a resin in the presence of oxygen, and examples thereof include phosphorus antioxidants, hindered phenol antioxidants, and thioether antioxidants. These antioxidants may be used alone or in combination of two or more thereof. Among these antioxidants, from the viewpoint of the effect of preventing the degradation of optical characteristics due to coloring, preferred are phosphorus antioxidants and hindered phenol antioxidants. A combination of a phosphorus antioxidant and a hindered phenol antioxidant is more preferred.

In the combination of a phosphorus antioxidant and a hindered phenol antioxidant, the ratio thereof is not particularly limited, and the mass ratio of the phosphorus antioxidant to the hindered phenol antioxidant is preferably 1/5 to 2/1 and more preferably 1/2 to 1/1.

Preferred examples of the phosphorus antioxidants include 2,2-methylenebis(4,6-di-t-butylphenyl)octyl phosphite (trade name: Adekastab HP-10, manufactured by ADEKA Corporation) and tris(2,4-di-t-butylphenyl) phosphite (trade name: IRGAFOS 168, manufactured by Ciba Specialty Chemicals Corporation).

Preferred examples of the hindered phenol antioxidants include pentaerythrityl tetrakis[3-(3,5-di-t-butyl-4-hydroxyphenyl)propionate] (trade name: IRGANOX 1010, manufactured by Ciba Specialty Chemicals Corporation) and octadecyl 3-(3,5-di-t-butyl-4-hydroxyphenyl)propionate (trade name: IRGANOX 1076, manufactured by Ciba Specialty Chemicals Corporation).

The thermal degradation inhibitor has an effect of preventing thermal degradation of a resin by capturing polymer radicals generated by exposure to high temperature in a substantially oxygen-free condition.

Preferred examples of the thermal degradation inhibitors include 2-t-butyl-6-(3'-t-butyl-5'-methyl-hydroxybenzyl)-4-methylphenyl acrylate (trade name: Sumilizer GM, manufactured by Sumitomo Chemical Co., Ltd.) and 2,4-di-t-amyl-6-(3',5'-di-t-amyl-2'-hydroxy-$\alpha$-methylbenzyl)phenyl acrylate (trade name: Sumilizer GS, manufactured by Sumitomo Chemical Co., Ltd.).

The ultraviolet absorber is a compound having an ability of absorbing ultraviolet. The ultraviolet absorber is a compound that is recognized to have a function of mainly converting light energy into heat energy.

Examples of the ultraviolet absorbers include benzophenones, benzotriazoles, triazines, benzoates, salicylates, cyanoacrylates, oxalic anilides, malonates, and formamidines. These ultraviolet absorbers may be used alone or in combination of two or more thereof.

Among these ultraviolet absorbers, preferred are benzotriazoles or ultraviolet absorbers having a maximum molar absorption coefficient $\varepsilon_{max}$ of 1200 dm$^3$·mol$^{-1}$cm$^{-1}$ or less in a wavelength range of 380 nm to 450 nm.

The benzotriazoles have an effect of highly preventing a reduction in optical characteristics, such as coloring due to ultraviolet irradiation, and are therefore preferred as the ultraviolet absorber for the case of applying the (meth)acrylic resin composition to the use requiring the characteristics described above.

Preferred examples of the benzotriazoles include 2-(2H-benzotriazol-2-yl)-4-(1,1,3,3-tetramethylbutyl)phenol (trade name: TINUVIN 329, manufactured by Ciba Specialty Chemicals Corporation) and 2-(2H-benzotriazol-2-yl)-4,6-bis(1-methyl-1-phenylethyl)phenol (trade name: TINUVIN 234, manufactured by Ciba Specialty Chemicals Corporation).

Ultraviolet absorbers having a maximum molar absorption coefficient $\varepsilon_{max}$ of 1200 dm$^3$·mol$^{-1}$cm$^{-1}$ or less in a wavelength range of 380 nm to 450 nm can prevent the resulting molded product from yellowing.

The maximum molar absorption coefficient $\varepsilon_{max}$ of an ultraviolet absorber is measured as follows. An ultraviolet absorber (10.00 mg) is dissolved in 1 L of cyclohexane such that undissolved matter is not visually observed. The resulting solution is placed in a quartz glass cell of 1 cm × 1 cm × 3 cm and is subjected to measurement of the absorbance in a wavelength range of 380 nm to 450 nm with a spectrophotometer, U-3410, manufactured by Hitachi, Ltd. The maximum molar absorption coefficient $\varepsilon_{max}$ is calculated from the molecular weight (Mw) of the ultraviolet absorber and the measured maximum absorbance ($A_{max}$) by the following expression:

$$\varepsilon_{max} = [A_{max} / (10 \times 10^{-3})] \times Mw.$$

Examples of the ultraviolet absorber having a maximum molar absorption coefficient $\varepsilon_{max}$ of 1200 dm$^3\cdot$mol$^{-1}$cm$^{-1}$ or less in a wavelength range of 380 nm to 450 nm include 2-ethyl-2'-ethoxy-oxalanilide (trade name: Sanduvor VSU, manufactured by Clariant (Japan) K.K.).

Among these ultraviolet absorbers, from the viewpoint of preventing deterioration of a resin by ultraviolet irradiation, benzotriazoles are preferably used.

The light stabilizer is a compound that is recognized to have a function of capturing radicals mainly generated by oxidation by light. Examples of suitable light stabilizers include hindered amines such as compounds having 2,2,6,6-tetraalkylpiperidine skeletons and the like.

The mold-releasing agent is a compound having a function of easily releasing a molded product from the mold. Examples of the mold-releasing agents include higher alcohols such as cetyl alcohol, stearyl alcohol and the like; and glycerin higher fatty acid esters such as stearic acid monoglyceride, stearic acid diglyceride and the like. In the present invention, the mold-releasing agent is preferably a combination of a higher alcohol and a glycerin fatty acid monoester. In the combination, the mass ratio of the higher alcohol to the glycerin fatty acid monoester is not particularly limited and is preferably 2.5/1 to 3.5/1 and more preferably 2.8/1 to 3.2/1.

The polymer processing aid is a compound having an effect of contributing to the accuracy and reduction in the thickness of a film formed from the (meth)acrylic resin composition. The polymer processing aid is usually polymer particles that can be produced by emulsion polymerization and have a particle diameter of 0.05 to 0.5 $\mu$m.

The polymer particles may be monolayer particles composed of a polymer having a single composition ratio and a single limiting viscosity or may be multilayer particles composed of two or more polymers having different composition ratios or different limiting viscosities. In such cases, a preferred example is particles having a two-layer structure comprising an inner layer composed of a polymer having a low limiting viscosity and an outer layer composed of a polymer having a high limiting viscosity of 5 dL/g or more.

The polymer processing aid preferably has a limiting viscosity of 3 to 6 dL/g. When the limiting viscosity is too low, the effect of improving the moldability tends to be low. A too high limiting viscosity tends to reduce the melt fluidity of the (meth)acrylic resin composition.

The (meth)acrylic resin composition may contain an impact resistance modifier. Examples of the impact resistance modifiers include core shell type modifier containing acrylic rubber or diene rubber as a core layer component; and a modifier comprising a plurality of rubber particles.

The organic coloring agent is preferably a compound having a function of converting ultraviolet rays, which are recognized to be harmful to resins, into visible light.

Examples of the light diffusion agent and the delustering agent include glass microparticles, cross-linked polysiloxane microparticles, cross-linked polymer microparticles, talc, calcium carbonate, and barium sulfate.

Examples of the fluorescent material include fluorescent pigments, fluorescent dyes, fluorescent white dyes, fluorescent brightening agents, and fluorescent whitening agents.

These additives may be added to the reaction raw material, may be added to the reaction product, or may be added to the (meth)acrylic resin composition obtained after devolatilization.

The (meth)acrylic resin composition obtained by the production method of the present invention can be molded (heat melt molded) by a known method, such as injection molding, compression molding, extrusion molding, or vacuum molding, to provide various molded products. Examples of molded products composed of the (meth)acrylic resin composition include signboard components such as advertising pillars, stand signboards, side signboards, transom signboards, rooftop signboards and the like; display components such as showcases, partition plates, store displays and the like; lighting components such as fluorescent lamp covers, mood lighting covers, lampshades, luminous ceilings, light walls, chandeliers and the like; interior components such as pendants, mirrors and the like; building components of doors, domes, safety window glass, partitions, stair wainscots, balcony wainscots, roofs of buildings for leisure and the like; transport-related components such as aircraft windshields, visors for pilots, motorbikes, motorboat windshields, light shield plates for buses, and sun visors, rear visors, head wings and headlight covers for automobiles and the like; electronic device components such as nameplates for acoustic imaging, stereo covers, television protection masks, vending machines and the like; medical device components such as infant incubators, roentgen components and the like; device-related components such as machine covers, gauge covers, experiment devices, rulers, dial plates, observation windows and the like; optics-related components such as liquid crystal protection plates, light guide plates, light guide films, Fresnel lenses, lenticular lenses, front plates of various displays, diffusion plates and the like; traffic-related components such as road markers, guide plates, curve mirrors, soundproof walls and the like; film members such as polarizer protective films, polarizing plate protective films, phase difference films, surface materials for automobile interiors, surface materials for cellular phones, marking films and the like; members for home electric appliances such as canopies and control panels of washing machines, top panels of rice cookers and the like; greenhouses, large-scale water baths, box water baths, clock panels, bathtubs, sanitary equipment, desk mats, sport components, toys, masks for face protection during welding, and the like.

EXAMPLES

The present invention will now be more specifically described by examples and comparative examples, but is not limited by the following examples. The present invention further encompasses all embodiments by arbitrarily combining matters specifying the technical features, such as characteristic values, forms, production methods, and uses, described above.

Measurement or the like of the physical values in Examples and Comparative Examples was performed by the following methods.

(Measurement of water)

The water content in a reaction solution was measured with a Karl-Fischer (KMA-210, manufactured by Kyoto Electronics Manufacturing Co., Ltd.).

(Polymerization conversion)

A column (GLC-G-230, manufactured by Sciences Inc., INERT CAP 1 (df: 0.4 $\mu$m, I.D.: 0.25 mm, length: 60 m)) was connected to a gas chromatograph (GC-14A, manufactured by Shimadzu Corporation). Analysis was performed under conditions of an injection temperature of 180°C, a detector temperature of 180°C, and column temperature increase of 10°C/min from 60°C to 200°C.

(Availability of control of polymerization conversion by stirring rotation speed)

In each Example and Comparative Example, the polymerization conversions were measured after stirring for 4 hours with a stirrer blade at rotation speeds of 200 rpm and 100 rpm, and were judged by the following criteria:

YES: a change in polymerization conversion of 2% or more, and
NO: a change in polymerization conversion of less than 2%.

(Content of dimer and trimer)

A column (GLC-G-230, manufactured by Sciences Inc., INERT CAP 1 (df: 1.0 $\mu$m, I.D.: 0.25 mm, length: 40 m)) was connected to a gas chromatograph (GC-14A, manufactured by Shimadzu Corporation). Analysis was performed under conditions of an injection temperature of 270°C, a detector temperature of 270°C, and column temperature increase of 10°C/min from 70°C to 270°C.

(Weight loss on heating)

The weight loss on heating was measured with a thermobalance (model: TGA-50, Shimadzu Corporation) in a nitrogen atmosphere by increasing the temperature to 300°C at a rate of temperature increase of 20°C/min and maintaining the temperature for 60 minutes.

(Injection moldability)

A pelletized (meth)acrylic resin composition was injection-molded into a plate having a length of 200 mm, a width of 60 mm, and a thickness of 0.6 mm with an injection molding machine (M-100-DM, manufactured by Meiki Co., Ltd.) at a cylinder temperature of 300°C, a mold temperature of 50°C, and a molding cycle of 15 minutes. The resulting plate was visually observed for whether bubbles (silver) occurred or not and was evaluated by the following criteria:

A: no silver was observed,

B: silver was observed, and

C: bubbles were observed on the whole surface.

(Evaluation of film defect)

A pelletized (meth)acrylic resin composition was extrusion-molded into a film having a thickness of 100 $\mu$m at a cylinder temperature of 250°C.

The resulting film was subjected to count of the number of defects (fish eyes) per unit area with a gel counter (FS-5, manufactured by Optical Control Systems GmbH), and the appearance was evaluated by the following criteria:

A: the number of defects per square meter is less than 2,000,

B: the number of defects per square meter is 2,000 or more and less than 3,000,

C: the number of defects per square meter is 3,000 or more and less than 6,000, and

D: the number of defects per square meter is 6,000 or more.

Example 1

A monomer mixture was prepared by putting 92 parts by mass of purified methyl methacrylate and 8 parts by mass of methyl acrylate in an autoclave equipped with a stirrer and a sampling tube. The monomer mixture had a b* value of 0.2. A raw material solution was prepared by dissolving in the monomer mixture 0.00653 part by mass of a polymerization initiator (2,2'-azobis(2-methylpropionitrile), AIBN, hydrogen abstraction ability: 1%, half-life at 140°C: 4 sec) and 0.45 part by mass of a chain transfer agent (n-octylmercaptan). The concentration of the polymerization initiator in the raw material solution was 65 ppm. The oxygen gas in the production apparatus was replaced by nitrogen gas.

The raw material solution was fed to a continuous flow type tank reactor (capacity: 0.1 m$^3$, tank diameter: 500 mm, max blend blade, blade diameter: 260 mm, rotation speed: 200 rpm) equipped with a brine-cooled condenser through two feeding ports mutually symmetrically placed in the top panel of the reactor at a constant flow rate such that the mean residence time was 150 minutes. Simultaneously, nitrogen gas was introduced into the gas phase of the reactor in an amount of 3.3 mol based on 100 mol in total of the monomers in the raw material solution. Bulk polymerization was performed by controlling the reaction solution temperature to 140°C and controlling the pressure of the reactor to 0.3 MPa with a pressure regulating valve through the brine-cooled condenser. During the operation, all of the raw material solution and water in the receiver of the condenser were discharged to the outside of the system. After the operation for three days, the reaction product solution was taken out from the sampling tube of the reaction tank and was analyzed. The reaction product solution had a viscosity of 1.08 Pa·s, a density of 1000 kg/m$^3$, and a (meth)acrylic resin content (polymerization conversion) of 52 % by mass.

The water content measured by a Karl-Fischer's method was 250 ppm. The perfect mixing time was 45 seconds, the stirring power was 2.6 kW/m$^3$, the Reynolds' number was 209, the power number was 6, and the dimensionless mixed number was 150. The value of $P_v \times \theta \times I \times \tau_{1/2}$ was 0.5. In addition, the rotation speed of the stirrer blade was changed to 100 rpm, and the change in polymerization conversion after 4 hours was confirmed to be 2% or more. It was therefore judged that the polymerization conversion can be controlled by the stirring rotation speed.

The discharged reaction product solution was heated to 230°C and was then fed to a flash tank. The feeding port of the flash tank was equipped with a flash nozzle. The reaction product solution was allowed to spout from the flash nozzle, and the unreacted monomer mixture was flash evaporated to separate into a gas and a liquid. The monomer vapor was discharged from the top of the flash tank, and the reaction product solution was discharged from the bottom of the flash tank. The discharged reaction product solution was fed into a twin-screw extruder and was extruded into a strand shape. The strand was cut with a pelletizer to give a pelletized (meth)acrylic resin composition.

The weight loss on heating of the (meth)acrylic resin composition and the content of dimers and trimers were measured. The results are shown in Table 1. The evaluation results of an injection molded product and a film molded product are also shown in Table 1.

Example 2

A raw material solution was prepared as in Example 1 except that 0.00502 part by mass of PB-IB (t-butylperoxy isobutyrate, hydrogen abstraction ability: 26%, half-life at 140°C: 41 seconds) was used instead of 0.00653 part by mass of AIBN. The concentration of the polymerization initiator in the raw material solution was 50 ppm. The oxygen gas in the production apparatus was replaced by nitrogen gas.

The raw material solution was fed to a continuous flow type tank reactor (capacity: 0.1 m$^3$, tank diameter: 500 mm, max blend blade, blade diameter: 260 mm, rotation speed: 200 rpm) equipped with a brine-cooled condenser through two feeding ports mutually symmetrically placed in the top panel of the reactor at a constant flow rate such that the mean residence time was 150 minutes. Simultaneously, nitrogen gas was introduced into the gas phase of the reactor in an amount of 3.3 mol based on 100 mol in total of the monomers in the raw material solution. Bulk polymerization was performed by controlling the reaction solution temperature to 140°C and controlling the pressure of the reactor to 0.3 MPa with a pressure regulating valve through the brine-cooled condenser. During the operation, parts of the raw material solution and water in the receiver of the condenser were discharged. After the operation for three days, the reaction product solution was taken out from the sampling tube of the reaction tank and was analyzed. The reaction product solution had a viscosity of 1.08 Pa·s, a density of 1000 kg/m$^3$, and a (meth)acrylic resin content (polymerization conversion) of 52 % by mass. The water content measured by a Karl-Fischer's method was 700 ppm. The perfect mixing time was 60 seconds, the stirring power was 2.2 kW/m$^3$, the Reynolds' number was 90, the power number was 5, and the dimensionless mixed number was 200. The value of $P_v \times \theta \times I \times \tau_{1/2}$ was 3.2. In addition, the rotation speed of the stirrer blade was changed to 100 rpm, and the change in polymerization conversion after 4 hours was confirmed to be 2% or more. It was therefore judged that the polymerization conversion can be controlled by the stirring rotation speed.

The weight loss on heating of the pelletized (meth)acrylic resin composition and the content of dimers and trimers were measured. The results are shown in Table 1. The evaluation results of an injection molded product and a film molded product are also shown in Table 1.

Example 3

The same procedure as in Example 1 was performed except that all the condensate from the brine-cooled condenser was returned to the polymerization tank. After the operation for three days, the reaction product solution was taken out from the sampling tube of the reaction tank and was analyzed. The reaction product solution had a viscosity of 1.08 Pa·s, a density of 1000 kg/m$^3$, and a (meth)acrylic resin content (polymerization conversion) of 52 % by mass. The water content measured by a Karl-Fischer's method was 1200 ppm. The perfect mixing time was 45 seconds, the stirring power was 2.6 kW/m$^3$, the Reynolds' number was 209, the power number was 6, and the dimensionless mixed number was 150. In addition, the rotation speed of the stirrer blade was changed to 100 rpm, and the change in polymerization conversion after 4 hours was confirmed to be 2% or more. It was therefore judged that the polymerization conversion can be controlled by the stirring rotation speed. The value of $P_v \times \theta \times I \times \tau_{1/2}$ was 0.5.

The weight loss on heating of the pelletized (meth)acrylic resin composition and the content of dimers and trimers were measured. The results are shown in Table 1. The evaluation results of an injection molded product and a film molded product are also shown in Table 1.

Comparative Example 1

A pelletized (meth)acrylic resin composition was prepared by the same procedure as in Example 2 except that the amount of PB-IB was changed to 0.00804 part by mass and that a single feeding port was used for feeding the raw material solution. The concentration of the polymerization initiator in the raw material solution was 80 ppm. The reaction product solution had a viscosity of 5.00 Pa·s, a density of 1000 kg/m$^3$, and a (meth)acrylic resin content (polymerization conversion) of 62 % by mass.

The water content measured by a Karl-Fischer's method was 250 ppm. The perfect mixing time was 60 seconds, the stirring power was 2.20 kW/m$^3$, the Reynolds' number was 45, the power number was 5, and the dimensionless mixed number was 200. The value of $P_v \times \theta \times I \times \tau_{1/2}$ was 5.1. In addition, the rotation speed of the stirrer blade was changed to 100 rpm, and the change in polymerization conversion after 4 hours was confirmed to be 2% or more. It was therefore judged that the polymerization conversion can be controlled by the stirring rotation speed.

The weight loss on heating of the pelletized (meth)acrylic resin composition and the content of dimers and trimers were measured. The results are shown in Table 1. The evaluation results of an injection molded product and a film molded product are also shown in Table 1.

Comparative Example 2

A pelletized (meth)acrylic resin composition was prepared by the same procedure as in Example 1 except that 0.00201 part by mass of PB-D (di-t-butyl peroxide (perbutyl D), hydrogen abstraction ability: 78%, half-life at 140°C: 3900 seconds) was used instead of 0.00653 part by mass of AIBN, that a single feeding port was used for feeding the raw material solution, and that the mean residence time in the reaction tank was changed to 240 minutes. The concentration of the polymerization initiator in the raw material solution was 20 ppm. The reaction product solution had a viscosity of 3.50 Pa·s, a density of 1000 kg/m$^3$, and a (meth)acrylic resin content (polymerization conversion) of 60 % by mass.

The water content measured by a Karl-Fischer's method was 250 ppm.

The perfect mixing time was 45 seconds, the stirring power was 2.2 kW/m$^3$, the Reynolds' number was 64, the power number was 5, and the dimensionless mixed number was 150. The value of $P_v \times \theta \times I \times \tau_{1/2}$ was 190.7. In addition, the rotation speed of the stirrer blade was changed to 100 rpm, and the change in polymerization conversion after 4 hours was confirmed to be less than 2%. It was therefore judged that the polymerization conversion cannot be controlled by the stirring rotation speed.

The weight loss on heating of the pelletized (meth)acrylic resin composition and the content of dimers and trimers were measured. The results are shown in Table 1. The evaluation results of an injection molded product and a film molded product are also shown in Table 1.

Comparative Example 3

A pelletized (meth)acrylic resin composition was prepared by the same procedure as in Example 1 except that the amount of AIBN was changed to 0.00753 part by mass and that a single feeding port was used for feeding the raw material solution. The reaction product solution had a viscosity of 1.08 Pa·s, a density of 1000 kg/m$^3$, and a (meth) acrylic resin content (polymerization conversion) of 50 % by mass. The water content measured by a Karl-Fischer's method was 250 ppm. The perfect mixing time was 45 seconds, the stirring power was 2.6 kW/m$^3$, the Reynolds' number was 209, the power number was 6, and the dimensionless mixed number was 150. The value of $P_v \times \theta \times I \times \tau_{1/2}$ was 0.6. In addition, the rotation speed of the stirrer blade was changed to 100 rpm, and the change in polymerization conversion after 4 hours was confirmed to be 2% or more. It was therefore judged that the polymerization conversion can be controlled by the stirring rotation speed.

The weight loss on heating of the pelletized (meth)acrylic resin composition and the content of dimers and trimers were measured. The results are shown in Table 1. The evaluation results of an injection molded product and a film molded product are also shown in Table 1.

[Table 1]

Table 1

| | | Ex. | | | Comp. Ex. | | |
|---|---|---|---|---|---|---|---|
| | | 1 | 2 | 3 | 1 | 2 | 3 |
| Polymerization tank | Number of monomer-feeding port | 2 | 2 | 2 | 1 | 1 | 1 |
| | Blade shape | Max blend blade | Max blend blade | Max blend blade | Max blend blade | Max blend blade | Max blend blade |
| | Capacity V [m³] | 0.1 | 0.1 | 0.1 | 0.1 | 0.1 | 0.1 |
| | Tank diameter D [mm] | 500 | 500 | 500 | 500 | 500 | 500 |
| | Blade diameter Dp [mm] | 260 | 260 | 260 | 260 | 260 | 260 |
| Polymerization conditions | Polymerization temperature T [°C] | 140 | 140 | 140 | 140 | 140 | 140 |
| | Initiator | AIBN | PB-IB | AIBN | PB-IB | PB-D | AIBN |
| | Half-life time $\tau_{1/2}$ [sec] | 4 | 41 | 4 | 41 | 3900 | 4 |
| | Mean residence time θ [hr] | 2.5 | 2.5 | 2.5 | 2.5 | 4.0 | 2.5 |
| | Amount of initiator I [ppm] | 65 | 50 | 65 | 80 | 20 | 75 |
| | Rotation speed N [rpm] | 200 | 200 | 200 | 200 | 200 | 200 |
| | Water content in reaction solution [ppm] | 250 | 700 | 1200 | 250 | 250 | 250 |
| Operation results | Conversion X [wt%] | 52 | 58 | 52 | 62 | 60 | 52 |
| | Viscosity μ [Pa·s] | 1.08 | 2.50 | 1.08 | 5.00 | 3.50 | 1.08 |
| | Density ρ [kg/m³] | 1000 | 1000 | 1000 | 1000 | 1000 | 1000 |
| | Reynolds' number Re | 209 | 90 | 209 | 45 | 64 | 209 |
| | Dimensionless mixed number N·θm | 150 | 200 | 150 | 200 | 150 | 150 |
| | Mixing time θm [sec] | 45 | 60 | 45 | 60 | 45 | 45 |
| | Power number Np | 6 | 5 | 6 | 5 | 5 | 6 |
| | Stirring power Pv [kW/m³] | 2.6 | 2.2 | 2.6 | 2.2 | 2.2 | 2.6 |
| | $Pv \times \theta \times I \times \tau_{1/2}$ [kW/m³.ppm.hr²] | 0.5 | 3.2 | 0.5 | 5.1 | 190.7 | 0.6 |
| | Availability of control of polymerization conversion by rotation speed | Yes | Yes | Yes | Yes | No | Yes |
| | Amount of dimer and trimer [mass%] | 0.07 | 0.10 | 0.07 | 0.10 | 0.20 | 0.08 |
| | Thermal stability (weight loss on heating with TGA) [%] | 20 | 20 | 20 | 30 | 40 | 20 |
| | Appearance of injection molded product (occurrence of silver) | A | A | A | B | B | A |
| | Appearance of film (particle defect) | A | B | C | A | A | A |

As shown in Table 1, when bulk polymerization is performed according to the present invention by continuously feeding a reaction raw material to a tank reactor through two feeding ports under conditions satisfying the requirements: $\theta_M > \tau_{1/2}$ and $P_v \times \theta \times I \times \tau_{1/2} < 4$, the polymerization conversion can be controlled by rotation speed of a stirrer blade, and the resulting (meth)acrylic resin composition contains merely a small amount of dimers and trimers, shows a low weight loss on heating, and causes less silver in the injection molded plate, i.e., has high thermal stability.

On the other hand, when bulk polymerization is performed by continuously feeding a reaction raw material to a tank reactor through one feeding port under conditions not satisfying the requirements: $\theta_M > \tau_{1/2}$ and $P_v \times \theta \times I \times \theta \tau_{1/2} < 4$, the resulting (meth)acrylic resin composition contains a large amount of dimers and trimers and shows a high weight loss on heating, i.e., has low thermal stability. In particular, when the bulk polymerization is performed under conditions not satisfying the requirement: $\theta_M > \tau_{1/2}$, the polymerization conversion cannot be controlled by the rotation speed of the stirrer blade, resulting in difficulty in the control of polymerization.

**Claims**

1. A method of producing a (meth)acrylic resin composition, wherein the method comprises the steps of:

   continuously feeding a reaction raw material comprising a chain transfer agent, a radical polymerization initiator and a monomer mixture comprising 80 to 100 % by mass of methyl methacrylate and 20 to 0 % by mass of an alkyl acrylate to a tank reactor through two or more feeding ports;
   bulk polymerizing the monomer mixture in the tank reactor until a polymerization conversion of 40 to 70 % by mass to prepare a reaction product; and
   removing the monomer mixture from the reaction product,
   wherein the perfect mixing time ($\theta_M$ [hr]) of the tank reactor, the half-life ($\tau_{1/2}$ [hr]) of the radical polymerization initiator at the temperature in the tank reactor, the stirring power (Pv [kW/m$^3$]) of the tank reactor, the mean residence time ($\theta$ [hr]) of the reaction raw material in the tank reactor, and the concentration (I [ppm]) of the radical polymerization initiator in the reaction raw material satisfy the following relationships:

$$\theta_M > \tau_{1/2},$$

   and

$$P_v \times \theta \times I \times \tau_{1/2} < 4.$$

2. The method according to Claim 1, wherein the temperature in the tank reactor is 110°C to 160°C; and the half-life of the radical polymerization initiator at the temperature in the tank reactor is 0.5 to 120 seconds.

3. The method according to Claim 1 or 2, wherein the step of removing the monomer mixture is performed by adiabatic flash evaporation.

4. The method according to any one of Claims 1 to 3, wherein the reaction solution in the tank reactor has a water content of 1000 ppm or less.

## INTERNATIONAL SEARCH REPORT

| International application No. |
| --- |
| PCT/JP2013/004036 |

| A. CLASSIFICATION OF SUBJECT MATTER |
| --- |
| *C08F2/01*(2006.01)i, *C08F2/02*(2006.01)i, *C08F6/28*(2006.01)i |

According to International Patent Classification (IPC) or to both national classification and IPC

| B. FIELDS SEARCHED |
| --- |
| Minimum documentation searched (classification system followed by classification symbols) |
| C08F2/01, C08F2/02, C08F6/28 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2752458 B2 (Kuraray Co., Ltd.),<br>18 May 1998 (18.05.1998),<br>claims; examples<br>(Family: none) | 1,2<br>3,4 |
| Y | JP 2009-256493 A (Kuraray Co., Ltd.),<br>05 November 2009 (05.11.2009),<br>paragraph [0044]<br>(Family: none) | 3 |
| Y | JP 8-127618 A (Mitsubishi Gas Chemical Co., Inc.),<br>21 May 1996 (21.05.1996),<br>claim 4<br>(Family: none) | 3 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 02 September, 2013 (02.09.13) | 17 September, 2013 (17.09.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2013/004036 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 9-87333 A  (Toray Industries, Inc.), 31 March 1997 (31.03.1997), paragraph [0017] (Family: none) | 4 |
| A | JP 7-126308 A  (Sumitomo Chemical Co., Ltd.), 16 May 1995 (16.05.1995), claims; examples & US 5728793 A          & GB 2284425 A & GB 9422239 A0        & SG 44814 A & CN 1102833 A | 1-4 |
| A | JP 61-200842 A  (Sumitomo Heavy Industries, Ltd.), 05 September 1986 (05.09.1986), claims; page 3, upper right column, line 10 to lower left column, line 16 (Family: none) | 1-4 |
| A | JP 7-136483 A  (Ikebukuro Horo Kogyo Co., Ltd.), 30 May 1995 (30.05.1995), claims; paragraph [0017] (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2752458 B
- JP H07126308 A
- JP H11255828 A
- JP 61200842 A
- JP H06312122 A

**Non-patent literature cited in the description**

- Hydrogen Abstraction Ability and Initiation Efficiency of Organic Peroxide. *NOF Corporation technical data,* April 2003
- Chemical Engineering References. 1968, 1068